**Europäisches Patentamt**

**European Patent Office**

**Office européen des brevets**

(11) Numéro de publication : **0 281 456 B1**

(12)

# FASCICULE DE BREVET EUROPEEN

(45) Date de publication du fascicule du brevet :
**08.04.92 Bulletin 92/15**

(51) Int. Cl.$^5$ : **A01J 5/04,** A01J 7/00

(21) Numéro de dépôt : **88400336.9**

(22) Date de dépôt : **16.02.88**

(54) **Dispositif de collecte du lait dans une installation de traite et son dispositif de lavage.**

(30) Priorité : **27.02.87 FR 8702640**

(43) Date de publication de la demande :
**07.09.88 Bulletin 88/36**

(45) Mention de la délivrance du brevet :
**08.04.92 Bulletin 92/15**

(84) Etats contractants désignés :
**AT BE CH DE ES GB GR IT LI LU NL SE**

(56) Documents cités :
**FR-A- 2 342 798**
**FR-A- 2 484 778**
**GB-A- 2 119 217**

(73) Titulaire : **DIABOLO MANUS, S.A.**
**26 rue des Osiers Coignières**
**F-78310 Maurepas (FR)**

(72) Inventeur : **Chetrit, Albert**
**2 allée du Quimperois**
**F-78310 Maurepas (FR)**

(74) Mandataire : **Cournarie, Michèle et al**
**OFFICE BLETRY R.& G. ROGER-PETIT &**
**R.BLETRY 2, boulevard de Strasbourg**
**F-75010 Paris (FR)**

**Description**

L'invention concerne un dispositif de collecte du lait dans une installation de traite et son dispositif de lavage.

Les installations de traite des vaches, brebis ou chèvres comportent à l'heure actuelle un ensemble de postes de traite munis de bras de traite, répartis de part et d'autre d'un ou plusieurs bancs de traite et reliés à une installation de collecte sous vide assurant la succion sur les mamelles des animaux à traire et l'évacuation du lait. Tout le lait est envoyé au fur et à mesure de la traite dans un tank à lait et après isolation de ce dernier, on procède au lavage de l'installation de traite en faisant circuler de l'eau sous vide. L'ensemble de l'installation étant toujours sous vide, on provoque par intervalles une aspiration d'air atmosphérique afin de créer des "bouchons" qui perturbent l'écoulement de l'eau et améliorent le lavage.

On sait l'importance que présente le lavage soigné d'une installation de traite, qui doit être pratiqué dès la fin de la traite pour éviter le dessèchement du lait restant, les plaques de lait séchées étant extrêmement difficiles ou impossibles à éliminer par la suite et entraînant des risques de contamination par des germes nocifs.

Pour permettre un lavage parfait de l'installation sous l'action d'un écoulement turbulent d'eau dans les canalisations, il est nécessaire que ces canalisations soient de volume et donc de diamètre relativement faible pour limiter la masse d'eau à mettre en mouvement. Les installations courantes utilisent donc des canalisations de collecte ou lactoducs dont les diamètres sont selon les valeurs standard de 51, 63 ou 75mm, selon la taille de l'installation essentiellement. Il est alors nécessaire de prévoir une chambre de réception dans laquelle le lait est amené du fait de l'aspiration créée par le vide établi dans l'installation. Lorsque le lait atteint un niveau prédéterminé dans cette chambre, une pompe à lait le transfère dans le tank à lait situé à l'extérieur de la salle de traite.

Le volume du lactoduc étant limité, la réserve de vide l'est également et on constate que le vide n'est pas stable, ce qui peut blesser ou faire souffrir les animaux que l'on trait.

En outre la nécessité de l'alternance du temps de succion (sous vide) et du temps de massage (retour à la pression atmosphérique) au niveau de la mamelle donne des variations du vide dans toute l'installation. Or l'aspiration du lait sous un vide instable ou irrégulier crée un écoulement turbulent qui entraîne des problèmes dus à la lipolyse (rupture des molécules lipidiques).

Le brevet GB-A-2 119 217 décrit essentiellement une installation de traite comportant un tuyau central de collecte de lait, avec entrée verticale du lait dans le tuyau central commun à deux quais de traite, ce tuyau ayant un diamètre de l'ordre de 15 cm, c'est-à-dire double de celui maximum utilisé de façon classique pour le lactoduc d'un seul quai de traite.

Pour le lavage, de l'eau circule dans l'installation. La masse d'eau à mettre en circulation pour un bon lavage est donc importante.

Pour remédier à ces inconvénients, il est fourni selon la présente invention un dispositif de collecte dans une installation de traite selon la revendication 1.

La conduite est équipée d'un plongeur qui, lorsque le niveau du lait dans la conduite atteint un niveau prédéterminé, met en service la pompe à lait qui évacue le lait vers un tank à lait.

La conduite est avantageusement constituée d'éléments modulaires, et comporte au moins un module récepteur avant relié à la pompe à lait, un module récepteur arrière et éventuellement des modules intermédiaires pouvant lui être adjoints.

La rampe de lavage est constituée d'éléments modulaires et comporte au moins un module avant, un module arrière et éventuellement des modules intermédiaires pouvant lui être adjoints.

D'autres avantages et caractéristiques de la présente invention apparaîtront à la lecture de la description suivante en référence aux dessins annexés dans lesquels:

la figure 1 est une vue en perspective d'une installation de traite classique,

la figure 2 et le schéma de fonctionnement de la collecte et du lavage dans l'installation de traite de la figure 1,

la figure 3 est le schéma de fonctionnement de la collecte et du lavage dans une installation de traite utilisant le dispositif de collecte selon la présente invention, ainsi que le dispositif de lavage correspondant,

la figure 4 est une vue partiellement en coupe d'un module récepteur avant contenant un module avant de lavage,

la figure 5 est une vue partiellement en coupe d'un module récepteur arrière contenant un module arrière de lavage,

la figure 6 est une vue en coupe selon la ligne A-A de la figure 4,

la figure 7 est une vue agrandie de la partie avant du module de lavage avant,

les figures 8a et 8b sont respectivement des vues de côté et de dessus des diffuseurs ou sphères de la rampe de lavage,

la figure 9 est une vue de la sphère terminale d'un module de lavage.

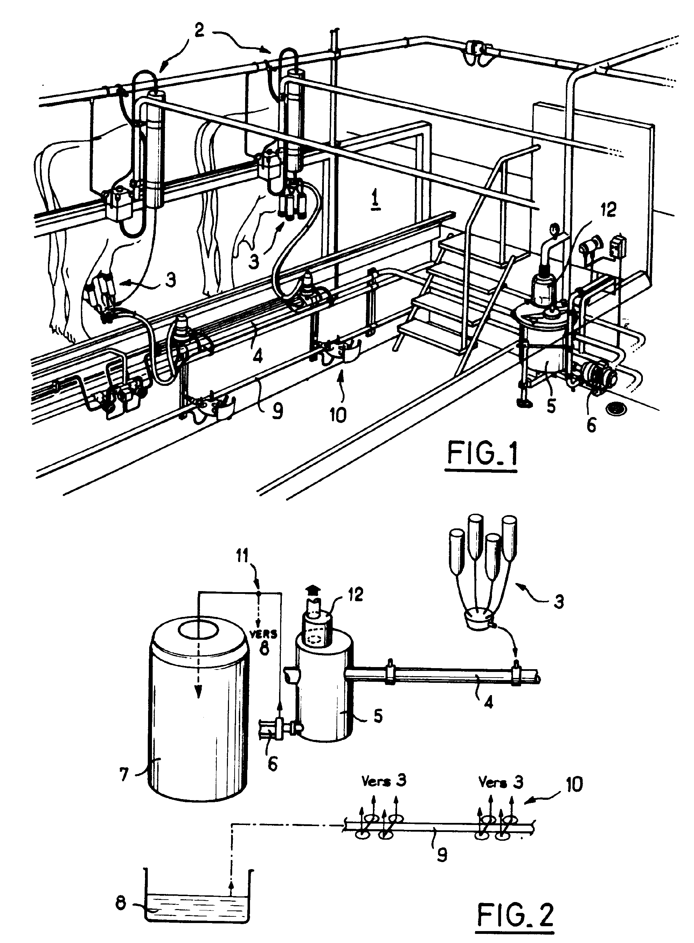

Afin de permettre de mieux comprendre l'intérêt de l'installation de collecte selon la présente invention, on va d'abord décrire succintement une installation de traite classique en se référant aux figures 1 et 2.

L'installation représentée sur la figure 1 est du type dans lequel la collecte du lait se fait dans un lactoduc 4 situé à un niveau inférieur à celui du banc de traite 1 sur lequel se tiennent les vaches (ou brebis ou chèvres). Dans un autre type, le lactoduc est situé au-dessus des postes de traite, mais dans les deux types, le fonctionnement de l'installation est le même dans son principe.

Pour la traite, chaque bras de traite 3 est installé sur les mamelles de la vache, par exemple, et le lait est aspiré dans le lactoduc 4, qui fait le tour de chaque banc de traite, sous l'effet du vide créé par la pompe à vide 12 dans l'ensemble des canalisations reliant les postes de traite 2. Le lait est amené dans une chambre de réception 5 d'où il est ensuite soutiré par une pompe à lait 6 qui l'envoie vers un tank à lait 7 (figure 2) situé à l'extérieur de la salle de traite et réfrigéré, qui peut conserver le lait pendant quelque temps. La traite terminée, on isole le tank à lait à l'aide de la vanne 11 et on relie l'installation au circuit de nettoyage comportant un bac de nettoyage contenant de l'eau relié à une rampe de lavage 9 équipée de supports 10 de bras de traite. Les bras de traite 3 sont fixés sur les supports 10 et sont lavés par l'eau qui les traverse et est aspirée dans le lactoduc 4 puis dans la chambre de réception 5. De là, l'eau de lavage est recyclée par la pompe 6 vers le bac de nettoyage 8. Lorsque le niveau d'eau dans le bac descend au-dessous du niveau de prise de la rampe 2, il y a aspiration d'air atmosphérique dans l'installation maintenue sous vide par la pompe 12 et création de "bouchons" qui provoquent un écoulement violent de l'eau assurant le lavage de l'installation. On ne décrira pas plus en détail le fonctionnement de telles installations qui est bien connu.

De façon classique, le lactoduc a un diamètre de 51, 63 ou 75mm, selon le nombre de postes de traite (deux, trois ou plus) de part et d'autre du banc de traite. Pour des raisons de sécurité de lavage on n'utilise pas de diamètre sensiblement plus grand qui donnerait un trop grand volume d'eau de lavage.

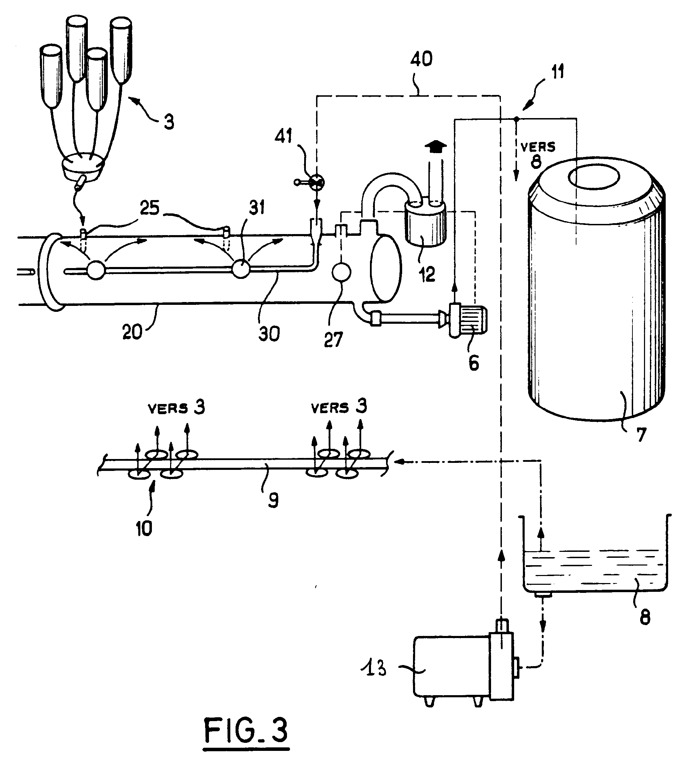

La figure 3 représente schématiquement une installation de traite utilisant le dispositif de collecte selon l'invention. Le lait recueilli dans les bras de traite 3 est amené dans une conduite 20 de diamètre relativement plus important que ceux utilisés jusqu'à présent, soit de l'ordre de 200mm. Cette valeur n'est bien sûr pas impérative et on peut la modifier dans le cadre de l'invention en changeant en conséquence les autres paramètres de construction. Le volume de la conduite 20 est alors considérablement plus grand que celui d'un lactoduc classique (à longueur égale) et cela permet de supprimer la chambre de réception 5 entre la conduite 20 et la pompe à lait 6. Lorsque le niveau du lait dans la conduite 20 atteint une valeur déterminée, un plongeur 27 met en route par des moyens classiques la pompe à lait 6 qui évacue le lait vers le tank à lait 7.

Une conduite de collecte indépendante est prévue de chaque côté du banc de traite. Cette indépendance améliore encore la régularité de l'écoulement. Ceci permet également d'éviter d'avoir à couder des conduites de grand diamètre.

De même que dans les installations classiques, une fois la traite terminée, on isole le tank à lait en femant la vanne 11. On met les bras de traite 3 en prise sur les supports 10 de la rampe de lavage 9 et le vide qui existe dans l'installation prélève de l'eau dans le bac 8, la fait passer dans les bras de traite d'où elle est envoyée dans la conduite 20. Par ailleurs de l'eau prélevée en 8 par une pompe 13 est envoyée dans une canalisation 40 équipée d'une vanne 41 fermée pendant la traite et ouverte pendant le lavage. La canalisation 40 amène l'eau sous pression dans une rampe de lavage 30 placée au centre de la conduite 20. Cette rampe comporte des diffuseurs 31 qui sont avantageusement des sphères munies de trous et de fentes par lesquels l'eau jaillit sous pression, les jets d'eau assurant le nettoyage de tout l'intérieur de la conduite. L'eau contenue dans la conduite 20, provenant tant de la rampe 9 que de la rampe interne 30, est renvoyée au bac 8 par la pompe 6.

Afin de faciliter la construction et la mise en place de la conduite 20, celle-ci est construite en éléments modulaires, de même que la rampe de lavage interne 30. Bien entendu chaque module peut varier en longueur selon les besoins de l'utilisateur et peut être relié à un nombre quelconque de postes de traite. Toutefois l'exemple décrit ci-dessous se réfère à un module de dimensions raisonnables relié à trois postes de traite.

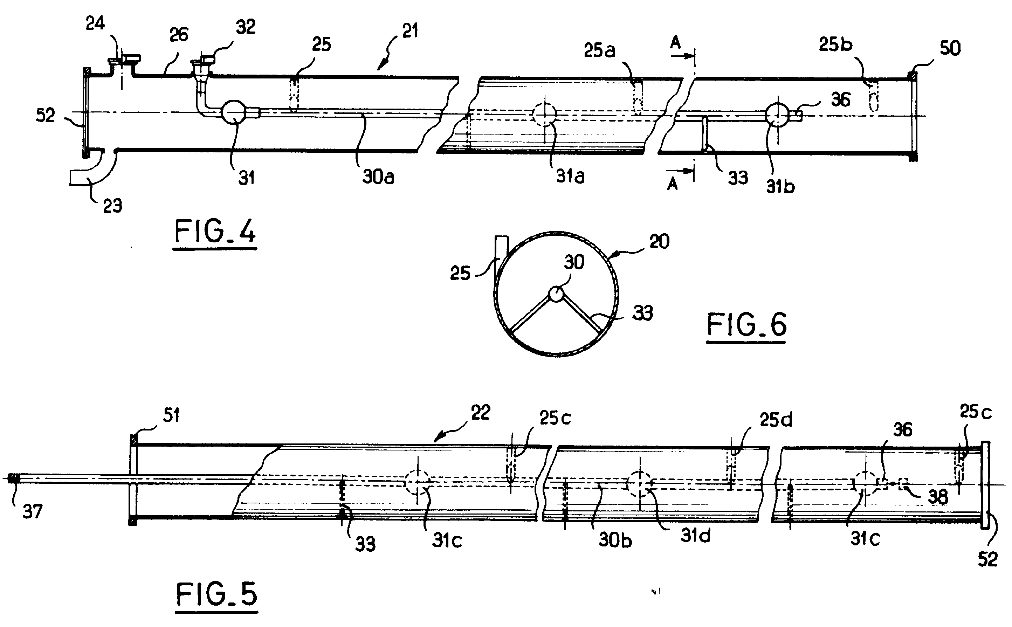

La figure 4 représente partiellement en coupe, un module collecteur avant 21 qui est un cylindre allongé dont la partie de tête (à gauche sur le dessin) est fermée et communique par la canalisation 23 avec la pompe à lait 6. Un orifice 24 permet le raccordement avec l'installation de vide et la pompe 12, tandis que l'orifice 26 permet l'introduction du plongeur 27 (visible sur le schéma de la figure 3). Des canalisations 25, 25a, 25b amènent le lait de chaque bras de traite et sont disposées tangentiellement à la conduite 20 (figure 6) de façon à permettre un écoulement non violent du lait vers le collecteur. L'extrémité arrière du module 21 est équipée d'une pièce de jonction 50 coopérant avec une pièce de raccordement 51 complémentaire situé à l'extrémité de tête du module arrière, la fixation des pièces 50 et 51 l'une à l'autre se faisant par des brides de serrage (non représentées) et assurant l'étanchéité de l'ensemble.

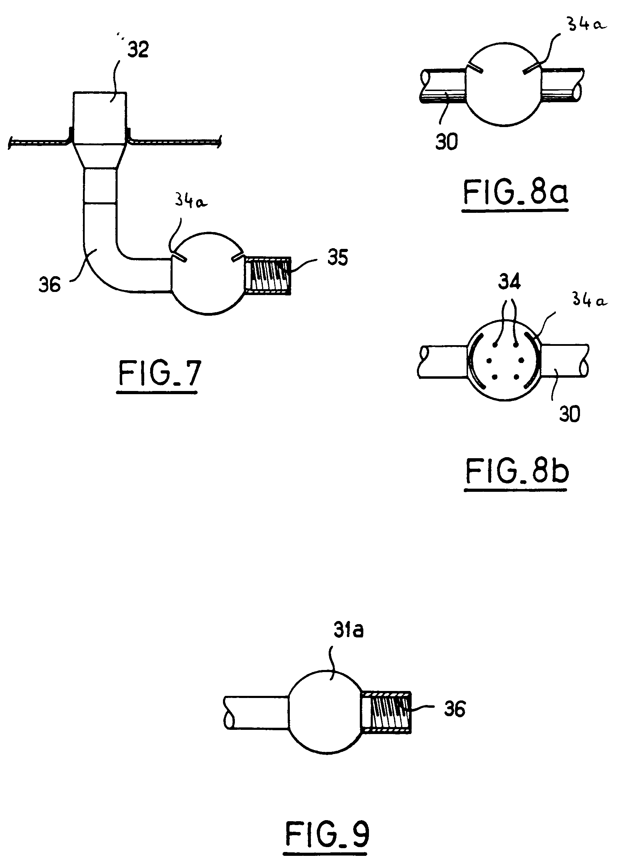

Le module collecteur avant 21 contient le module avant 30a de la rampe de lavage interne. Le module 30a est précédé d'une extrémité de raccordement (figure 7) constituée par une partie coudée 36 reliée par un raccord 32 à la canalisation 42 amenant l'eau de lavage et terminée par une sphère 31 prolongée d'un raccord femelle 35 dans lequel vient se visser la partie mâle du module 30a. Le module 30a comporte ensuite une canalisation droite munie de deux sphères 31a et 31b. Le module 30a se termine par un raccord femelle 36 (figure 9) en retrait par rapport à l'extrémité du module collecteur avant 21.

La rampe 30a est soutenue au centre du module par deux tiges (33) soudées à angle droit sur le dessous de la rampe et reposant sur la paroi interne du module collecteur (figure 6).

Les figures 8a et 8b montrent la configuration et la position des trous et fentes par lesquels sortent les jets d'eau sous pression. A la partie supérieure de la sphère, six trous 34 sont disposés en cercle et projettent de l'eau pratiquement à la verticale tandis que deux fentes latérales 34a, en arc de cercle sont disposées obliquement par rapport à l'horizontale. La distance entre deux sphères est calculée, pour que les jets d'eau sortant des fentes latérales 34a en vis-à-vis de sphères voisines (par exemple 31 et 31a) viennent frapper, pour une pression déterminée de l'eau, la paroi interne du module collecteur au milieu de la distance séparant les deux sphères.

Par exemple pour un module avant d'une longueur de 2,85m la distance entre deux sphères sera de l'ordre de 1,10m, la sphère 31 étant située à environ 0,6m de l'extrémité avant du module, l'angle des fentes latérales 34a par rapport à l'horizontale étant de 30°.

Le module collecteur arrière 22 est, come le module collecteur avant 21, un cylindre allongé dont l'extrémité avant comporte un raccord 51 complémentaire du raccord 50 du module avant 21. Il comporte des canalisations 25c, 25d et 25e d'arrivée de lait similaires aux canalisations 25 à 25b du module avant.

L'extrémité avant du module collecteur avant et l'extrémité arrière du module collecteur arrière sont fermées par un hublot 52, de préférence vitré permettant l'examen visuel de l'intérieur du collecteur.

Les modules collecteurs intermédiaires éventuellement utilisés diffèrent du module collecteur arrière simplement en ce que le hublot 52 est remplacé par un raccord 40 complémentaire du raccord 51 du module placé derrière.

Le module de lavage convenant aux modules intermédiaires et/ou arrière est constitué d'une rampe 30b similaire à la rampe 30a et munie de sphères 31c, 31d et 31e similaires aux sphères 31 à 31b de la rampe de lavage du module avant. L'extrémité avant de la rampe 30b porte un raccord mâle 37 et se prolonge au-delà de l'extrémité de tête pour permettre au raccord mâle 37 de venir s'engager dans le raccord femelle 36 de la rampe 30a du module avant et pour permettre simultanément aux raccords 50 et 51 de coopérer pour réunir deux modules successifs.

Dans le cas d'un module de lavage intermédiaire, le raccord femelle 36 arrière reçoit l'extrémité avant 37 du module suivant, tandis que dans le cas d'un module de lavage arrière, il est prévu un bouchon 38 qui ferme la rampe de lavage 30b.

Il peut suffire, lorsque les dimensions du banc de traite sont relativement faibles, d'utiliser seulement un module collecteur avant et son module de lavage avant. Dans un tel cas l'extrémité arrière du module avant 21 sera fermée par un hublot (comme dans le cas du module arrière) et l'extrémité arrière de la rampe de lavage sera fermée par un bouchon.

Les tubes constituant les modules collecteurs sont en tôle de 2mm (diamètre extérieur 204mm pour un diamètre intérieur de 200mm, par exemple) et tous les éléments sont obligatoirement en acier inoxydable de qualité alimentaire.

Il va sans dire que bien que l'invention ait été décrite et représentée principalement pour la traite des vaches, l'utilisation d'un collecteur selon l'invention convient à la traite des brebis et des chèvres. En fait les seules modifications à apporter concernent les bras de traite qui doivent recevoir des gobelets trayeurs adaptés à l'animal à traire.

**Revendications**

1. Dispositif de collecte de lait dans une installation de traite, celle-ci comportant au moins un banc de traite (1) équipé de postes de traite (2) répartis de chaque côté du banc, un dispositif de collecte constitué par au moins une conduite de collecte (20) ayant un diamètre de l'ordre de 20cm faisant office à la fois de lactoduc et de chambre de réception et raccordée à des bras de traite (3) par des canalisations verticales (25, 25a, ...), une pompe à vide (12) créant une succion dans le dispositif de collecte ainsi qu'une pompe (6) évacuant le lait contenu dans le dispositif de collecte vers un tank de stockage (7), caractérisé en ce qu'il comporte deux conduites de collecte indépendantes, et situées de part et d'autre de chaque banc de traite, dans lesquelles les canalisations (25, 25a, ...) débouchant tangentiellement et que chaque conduite de collecte (20) comporte une rampe de lavage interne (30) munie de diffuseurs (31, 31a, ...), dans laquelle on fait circuler de l'eau sous pression une fois la collecte du lait terminée.

2. Dispositif de collecte de lait selon la revendication 1, caractérisé en ce que chaque conduite est équipée d'un plongeur (27) qui met en service la pompe à lait (6) qui évacue le lait vers le tank à lait (7) lorsque le niveau du lait dans la conduite atteint un niveau prédéterminé.

3. Dispositif de collecte de lait selon l'une ou l'autre des revendications 1 et 2, caractérisé en ce que chaque conduite (20) est constituée d'éléments modulaires pouvant être assemblés et comporte au moins un module collecteur avant (21) relié à la pompe à lait (6), un module collecteur arrière (22) et des modules collecteurs intermédiaires pouvant lui être adjoints.

4. Dispositif de collectes selon la revendication 3, caractérisé en ce que la rampe de lavage est constituée d'éléments modulaires, et comporte au moins un module avant (30a), un module arrière (30b) et des modules intermédiaires pouvant lui être adjoints.

5. Dispositif de collecte selon la revendication 4, caractérisé en ce que le module avant (30a) de la rampe de lavage est plus court que le module collecteur avant (21) de la conduite de collecte (20) qui le contient.

6. Dispositif de collecte selon la revendication 5, caractérisé en ce que le module arrière (30b) ou intermédiaire de la rampe de lavage se prolonge au-delà de l'extrémité avant du module collecteur de la conduite de collecte qui le contient.

7. Dispositif de collecte selon l'une quelconque des revendications 3 à 6, caractérisé en ce que la rampe de lavage est situé au centre de la conduite de collecte.

8. Dispositif de collecte selon la revendication 7, caractérisé en ce que la rampe de lavage (30) est soutenue à intervalles réguliers par des supports (33) formés de deux tiges soudées à angle droit sur le dessous de la rampe de lavage et reposant sur la paroi interne de la conduite de collecte (20).

9. Dispositif de collecte selon l'une quelconque des revendications 3 à 8, caractérisé en ce que les diffuseurs sont des sphères (31, 31a,...) percées à leur partie supérieure de trous (34) régulièrement répartis et de deux fentes latérales en arc de cercle, disposées obliquement par rapport à l'horizontale.

10. Dispositif de collecte selon la revendication 9, caractérisé en ce que la distance entre deux sphères voisines est telle que les jets d'eau sortant des fentes latérales en vis-à-vis des sphères voisines viennent frapper la paroi interne de la conduite au milieu de la distance entre les deux sphères.

**Patentansprüche**

1. Sammelvorrichtung für Milch in einer Melkanlage, die wenigstens eine Melkbank (1), die mit Melkständen (2) versehen ist, die auf jeder Seite der Bank verteilt sind, eine Sammelvorrichtung, die durch wenigstens eine Sammelleitung (20) mit einem Durchmesser von der Größenordnung 20 cm gebildet ist, gleichzeitig als Milchleitung und Aufnahmekammer dient und mit den Melkzweigen (3) durch vertikale Röhren (25, 25a, ...) verbunden ist, eine Unterdruckpumpe (12), die in der Sammelvorrichtung eine Saugwirkung erzeugt, und eine Pumpe (6) aufweist, die die in der Sammelvorrichtung enthaltene Milch in eine Speichertank entleert, dadurch gekennzeichnet, daß sie zwei unabhängige Sammelleitungen aufweist, die beidseitig von jeder Melkband angeordnet sind und in die die Röhren (25, 25a, ...) tangential einmünden, und daß jede Sammelleitung (20) eine innere Spülleitung (30) aufweist, die mit Zerstäubern (31,31a, ...)

versehen ist, in der man Wasser unter Druck fließen läßt, wenn das Sammeln der Milch beendet ist.

2. Sammelvorrichtung für Milch nach Anspruch 1, dadurch gekennzeichnet, daß jede Leitung mit einem Tauchkolben (27) ausgerüstet ist, der die Milchpumpe (6) in Betrieb setzt, die die Milch zum Milchtank (7) entleert, wenn der Pegel der Milch in der Leitung einen vorbestimmten Pegel erreicht.

3. Sammelvorrichtung für Milch nach einem der Ansprüche 1 und 2, dadurch gekennzeichnet, daß jede Leitung (20) aus modularen Elementen gebildet ist, die zusammengesetzt werden können, und wenigstens einen vorderen Sammelmodul (21) aufweist, der an die Milchpumpe (6) angeschlossen ist, wobei ein hinterer Sammelmodul (22) und Sammelzwischenmodule hinzugefügt sein können.

4. Sammelvorrichtung nach Anspruch 3, dadurch gekennzeichnet, daß die Spülleitung aus modularen Einheiten gebildet ist und wenigstens einen vorderen Modul (30a) aufweist, wobei ein hinterer Modul (30b) und Zwischenmodule hinzugefügt sein können.

5. Sammelvorrichtung nach Anspruch 4, dadurch gekennzeichnet, daß der vordere Modul (30a) der Spülleitung kürzer ist als der vordere Sammelmodul (21) der Sammelleitung (20), die ihn enthält.

6. Sammelvorrichtung nach Anspruch 5, dadurch gekennzeichnet, daß der hintere Modul (30b) oder der Zwischenmodul der Spülleitung sich über das vordere Ende des Sammelmoduls der Sammelleitung erstreckt, die ihn enthält.

7. Sammelvorrichtung nach einem der Ansprüche 3 bis 6, dadurch gekennzeichnet, daß die Spülleitung im Zentrum der Sammelleitung angeordnet ist.

8. Sammelvorrichtung nach Anspruch 7, dadurch gekennzeichnet, daß die Spülleitung (30) in regelmäßigen Abständen durch Abstützungen (33) gehalten ist, die aus zwei Stäben gebildet sind, die in rechtem Winkel auf der Unterseite der Spülleitung angeschweißt sind und sich auf der Innenwand der Sammelleitung (20) abstützen.

9. Sammelvorrichtung nach einem der Ansprüche 3 bis 8, dadurch gekennzeichnet, daß die Zerstäuber Kugeln (31, 31a, ...) sind, die in ihrem oberen Teil von regelmäßig verteilten Löchern (34) und von zwei zur Horizontalen schräg angeordneten kreisbogenförmigen seitlichen Schlitzen durchbohrt sind.

10. Sammelvorrichtung nach Anspruch 9, dadurch gekennzeichnet, daß der Abstand zwischen zwei benachbarten Kugeln ein solcher ist, daß die aus den seitlichen, den benachbarten Kugeln gegenüberstehenden Schlitzen austretenden Wasserstrahlen auf die Innenwand der Leitung in der Mitte des Abstands zwischen den beiden Kugeln auftreffen.

**Claims**

1. A milk-collecting apparatus in a milking installation, the latter comprising at least one milking stand (1) provided with milking stations (2) distributed on either side of the stand, a collecting apparatus formed by at least one collecting duct (20) which has a diameter of the order of 20 cm and serves both as a milk pipeline and as a receiving chamber, and which is connected to milking arms (3) by vertical pipes (25, 25a, ...), a vacuum pump (12) creating a suction in the collecting apparatus, and also a pump (6) discharging the milk contained in the collecting apparatus towards a storage tank (7), characterised in that it comprises two independent collecting ducts which are disposed on either side of each milking stand and into which the pipes (25, 25a, ...) discharge tangentially, and in that each collecting duct (20) comprises an internal washing manifold (30) which is provided with diffusers (31, 31a,...) and in which water is caused to circulate under pressure when the collection of milk has been completed.

2. A milk collecting apparatus according to claim 1, characterised in that each duct is provided with a plunger (27) which actuates the milk pump (6) which discharges the milk towards the milk tank (7) when the level of the milk in the duct reaches a predetermined level.

3. A milk collecting apparatus according to either of claims 1 and 2, characterised in that each duct (20) is composed of modular elements which can be fitted together and comprises at least one front collector unit (21) connected to the milk pump (6), a rear collector unit (22) and intermediate collector units which can be attached thereto.

4. A collecting apparatus according to claim 3, characterised in that the washing manifold is composed of modular elements and comprises at least one front unit (30a), a rear unit (30b) and intermediate units which can be attached thereto.

5. A collecting apparatus according to claim 4, characterised in that the front unit (30a) of the washing manifold is shorter than the front collector unit (21) of the collecting duct (20) which contains it.

6. A collecting apparatus according to claim 5, characterised in that the rear or intermediate unit (30b) of the washing manifold extends beyond the front end of the collector unit of the collecting duct which contains it.

7. A collecting apparatus according to any one of claims 3 to 6, characterised in that the washing manifold is disposed in the centre of the collecting duct.

8. A collecting apparatus according to claim 7, characterised in that the washing manifold (30) is supported at regular intervals by supports (33) formed by two rods welded at right angles on to the underside of the washing manifold and resting on the inner wall of the collecting duct (20).

9. A collecting apparatus according to any one of claims 3 to 8, characterised in that the diffusers are spheres (31, 31a, ...) perforated in their upper part with regularly spaced holes (34) and with two arcuate lateral slots arranged obliquely relative to the horizontal.

10. A collecting apparatus according to claim 9, characterised in that the distance between two adjacent spheres is such that the jets of water emerging from the lateral slots, facing the adjoining spheres, will strike the inner wall of the duct midway between the two spheres.

FIG.1

FIG.2

7

FIG. 3

24  26  32  25  21  25a  A  25b  50

52

23

31  30a  31a  A  33  31b

FIG.4

25  30  20  33

FIG.6

51  22  25c  25d  36  25c

37  33  31c  30b  31d  31c  38  52

FIG.5

EP 0 281 456 B1

32

34a

34a

30

FIG.8a

36

35

FIG.7

34

34a

30

FIG.8b

31a

36

FIG.9